(19)

Europäisches Patentamt
European Patent Office
Office européen des brevets

(11)  EP 2 658 346 A2

(12)  EUROPÄISCHE PATENTANMELDUNG

(43) Veröffentlichungstag:
     30.10.2013  Patentblatt 2013/44

(51) Int Cl.:
     *H05B 33/08* (2006.01)

(21) Anmeldenummer: 13164070.8

(22) Anmeldetag: 17.04.2013

(84) Benannte Vertragsstaaten:
     **AL AT BE BG CH CY CZ DE DK EE ES FI FR GB
     GR HR HU IE IS IT LI LT LU LV MC MK MT NL NO
     PL PT RO RS SE SI SK SM TR**
     Benannte Erstreckungsstaaten:
     **BA ME**

(30) Priorität: **23.04.2012  DE 202012004052 U**

(71) Anmelder: **OSRAM GmbH**
     **80807 München (DE)**

(72) Erfinder:
     • **Rudolph, Bernd**
       **85659 Forstern (DE)**
     • **Graser, Daniel**
       **85716 Unterschleißheim (DE)**

(54)  **Buck-Konverter zum Bereitstellen eines Stroms für mindestens eine LED**

(57)  Die vorliegende Erfindung betrifft einen Buck-Konverter zum Bereitstellen eines Stroms für mindestens eine LED. Dabei wird eine aus der WO 2012/010591 A2 bekannter Buck-Konverter unter Verwendung einer Startschaltung (14) und einer Bootstrap-Schaltung (16) derart modifiziert, dass sich der Buck-Konverter unter Verwendung einer N-Kanal-MOSFET-Halbbrücke realisieren lässt.

Fig.2

EP 2 658 346 A2

## Beschreibung

## Technisches Gebiet

Die vorliegende Erfindung betrifft einen Buck-Konverter zum Bereitstellen eines Stroms für mindestens eine LED mit einem ersten Eingang mit einem ersten und einem zweiten Eingangsanschluss zum Koppeln mit einer ersten Gleichspannungsquelle, einem Ausgang mit einem ersten und einem zweiten Ausgangsanschluss zum Koppeln mit der mindestens einen LED, einer Buck-drossel, einem ersten Shunt-Widerstand, der derart angeordnet ist, dass er sowohl in der Auflade- als auch in der Entladephase der Buckdrossel vom Strom durch die mindestens eine LED durchflossen wird, und einem zweiten Shunt-Widerstand, der derart angeordnet ist, dass er nur in der Entladephase der Buck-drossel vom Strom durch die mindestens eine LED durchflossen wird.

## Stand der Technik

Mit dem Vordringen von LEDs in weite Bereiche der Allgemeinbeleuchtung ergibt sich der Bedarf nach besonders einfachen und kostengünstigen Stromversorgungsschaltungen für diese Bauteile, die andererseits immer mehr vom Mikrocontrollern gesteuert werden, um deren Funktionalität, insbesondere Farbkonstanz, Farbmischung, Dimmbarkeit, thermische Abregelung, und dergleichen, sicherzustellen.

Ein besonders einfacher, gattungsgemäßer und trotzdem leistungsfähiger Buck-Konverter, der im Continuous-Mode arbeitet, ist bekannt aus der WO 2012/010591 A2. Eine Ausführungsform, die sich durch besonders gute dynamische Eigenschaften auszeichnet, ist in der Fig. 2 der genannten Druckschrift dargestellt. Allerdings fällt bei der Betrachtung dieser Schaltung auf, dass diese zur Messung des LED-Stroms mit Massebezug einen P-Kanal-MOSFET als Schalter benötigt. Derartige Schalter sind bei einer Spannungsfestigkeit von mehr als ca. 50 V teuer beziehungsweise erreichen bei vergleichbarem Preis nicht die Spannungsfestigkeit vergleichbarer N-Kanal-MOSFETs.

## Darstellung der Erfindung

Die Aufgabe der vorliegenden Erfindung besteht deshalb darin, einen gattungsgemäßen Buck-Konverter derart weiterzubilden, dass eine kostengünstigere Herstellung bei vergleichbarer oder verbesserter Performance ermöglicht wird.

Diese Aufgabe wird gelöst durch einen Buck-Konverter mit den Merkmalen von Patentanspruch 1.

Der vorliegenden Erfindung liegt die Erkenntnis zugrunde, dass eine kostengünstigere Herstellung ermöglicht wird, wenn sie den Einsatz eines oder mehrere N- Kanal- MOSFET- Transistoren ermöglicht. Ein Austausch des P- Kanal- MOSFET- Transistors durch einen einzelnen N- Kanal- MOSFET- Transistor ist zwar nicht möglich, jedoch besteht die Möglichkeit N- Kanal- MOSFET- Transistoren zu verwenden, wenn eine Brückenschaltung mit einem ersten und einem zweiten elektronischen Schalter in Halbbrückenanordnung verwendet wird. Problematisch gestaltet sich hierbei jedoch die Ansteuerung des hochliegenden Schalters der Halbbrückenanordnung. Erfindungsgemäß ist deshalb eine Startschaltung sowie eine Bootstrap- Schaltung vorgesehen, wobei die Startschaltung dafür sorgt, dass der Bootstrap-Kondensator der Bootstrap- Schaltung, der für die Versorgung einer Ansteuerschaltung zur Ansteuerung des hochliegenden Schalters notwendig ist, geladen wird.

Insofern zeichnet sich ein erfindungsgemäßer Buck-Konverter dadurch aus, dass er weiterhin einen zweiten Eingang mit einem ersten und einem zweiten Eingangsanschluss zum Koppeln mit einer zweiten Gleichspannungsquelle umfasst. Wie bereits erwähnt, ist eine Brückenschaltung mit einem ersten und einem zweiten elektronischen Schalter in Halbbrückenanordnung vorgesehen, wobei der erste und der zweite Schalter unter Ausbildung eines Brückenmittelpunkts seriell zwischen den ersten und den zweiten Eingangsanschluss des ersten Eingangs gekoppelt sind. Dabei stellt der erste Schalter den hochliegenden Schalter und der zweite Schalter den tiefliegenden Schalter dar. Der erste und der zweite elektronische Schalter weisen jeweils eine Steuerelektrode, eine Arbeitselektrode und eine Bezugselektrode auf. Die Buckdrossel ist zwischen den Brückenmittelpunkt und den ersten Ausgangsanschluss gekoppelt. Eine Ansteuervorrichtung, die zur Ansteuerung des ersten und des zweiten elektronischen Schalters dient, umfasst einen ersten Ausgang, der mit der Steuerelektrode des ersten elektronischen Schalters gekoppelt ist, einen zweiten Ausgang, der mit der Steuerelektrode des zweiten elektronischen Schalters gekoppelt ist, einen dritten Ausgang, der mit dem Brückenmittelpunkt gekoppelt ist, sowie einen ersten, einen zweiten, einen dritten und einen vierten Eingang. Die über dem ersten Shunt-Widerstand abfallende Spannung ist mit dem ersten Eingang der Ansteuervorrichtung gekoppelt, während die über dem zweiten Shunt-Widerstand abfallende Spannung mit dem zweiten Eingang der Ansteuervorrichtung gekoppelt ist. Die Ansteuervorrichtung ist ausgelegt, unter Verwendung der Spannung am ersten Eingang als ersten Anteil eines ersten Steuersignals an ihrem Ausgang ein Abschaltsignal für den ersten Schalter und ein Einschaltsignal für den zweiten Schalter zu erzeugen, und unter Verwendung der Spannung am zweiten Eingang als ersten Anteil eines zweiten Steuersignals an ihrem Ausgang ein Einschaltsignal für den ersten Schalter und ein Ausschaltsignal für den zweiten Schalter zu erzeugen. Der dritte Eingang der Ansteuervorrichtung ist mit dem ersten Eingangsanschluss des zweiten Eingangs gekoppelt. Die Startschaltung weist einen ersten und einen zweiten Eingang auf, wobei der erste Eingang der Startschaltung mit dem ersten Eingangsanschluss des ersten Eingangs gekoppelt ist, wobei der zweite Eingang der Startschaltung mit dem Brückenmittelpunkt gekoppelt ist. Sie weist überdies einen Ausgang auf, der mit dem vierten Eingang der Ansteuervorrichtung gekoppelt ist. Die Startschaltung ist ausgelegt, nach dem Anlegen der ersten Gleichspannungsquelle an den ersten Eingang des Buck-Konverters ein Schaltsignal einer vorgebbaren Dauer an ihrem Ausgang bereitzustellen. Schließlich ist eine Bootstrap-Schaltung mit einer Bootstrap-Diode und einem Bootstrap-Kondensator in Serienschaltung vorgesehen, wobei der von der Bootstrap-Diode abgewandte Anschluss des Bootstrap-Kondensators mit dem Brückenmittelpunkt gekoppelt ist. Der von dem Bootstrap-Kondensator abgewandte Anschluss der Bootstrap-Diode ist mit dem ersten Eingangsanschluss des zweiten Eingangs gekoppelt. Der Verbindungspunkt zwischen der Bootstrap-Diode und dem Bootstrap-Kondensator ist mit dem fünften Eingang der Ansteuervorrichtung gekoppelt. Die Ansteuervorrichtung ist überdies ausgelegt, an ihrem ersten Ausgang ein Spannungssignal bereitzustellen, wenn die Spannung am fünften Eingang einen vorgebbaren Wert übersteigt.

Durch diese Verschaltung wird ermöglicht, dass die Startschaltung die Ansteuervorrichtung derart ansteuert, dass diese - nach einer gewissen Verzögerung - nach dem Anliegen der Versorgungsspannungen zunächst den tiefliegenden Schalter der Halbbrückenanordnung für eine gewisse Zeit einschaltet. Dadurch wird der Bootstrap-Kondensator geladen, sodass nach dem Abschalten des tiefliegenden Schalters der hochliegende Schalter eingeschaltet werden kann. Dieser bleibt solange eingeschaltet, bis eine obere Abschaltschwelle erreicht wird. Dieser Zustand wird über die Freilaufphase solange aufrechterhalten, bis eine untere Abschaltquelle erreicht ist, usw. Die Startschaltung sorgt demnach dafür, dass zunächst der Bootstrap-Kondensator, der für die Versorgung der Ansteuerschaltung zur Ansteuerung des hochliegenden Schalters notwendig ist, geladen wird.

Die Einstellung der oberen und der unteren Abschaltschwelle ist aus der genannten WO 2012/010591 A2 bekannt, sodass im Hinblick auf entsprechende Ausführungsformen und deren Erläuterungen auf diese Druckschrift verwiesen wird, deren Inhalt durch diese Bezugnahme in die vorliegende Anmeldung aufgenommen wird.

Durch den Einsatz einer N- Kanal- MOSFET-Halbbrücke können kostengünstige Bauteile eingesetzt werden, die in einem weiten Sprektrum (UDS, rDSON, QGtotal) zur Verfügung stehen. Bedingt durch den zweiten MOSFET der Halbbrücke kann eine Synchrongleichrichterfunktion erfüllt werden, wodurch ein erfindungsgemäßer Buck- Konverter den aus der genannten WO 2012/010591 A2 bekannten Buck- Konvertern hinsichtlich der Effizienz weit überlegen ist.

Ein erfindungsgemäßer Buck-Konverter zeichnet sich weiterhin durch einen höheren Wirkungsgrad aus als der bekannte Buck-Konverter. Dies liegt daran, dass N-Kanal-MOSFETS einen geringeren Durchlasswiderstand $R_{DSon}$ aufweisen als P-Kanal-MOSFETS. Insbesondere beim Betrieb im Continuous-Mode ergeben sich durch geringere QGtotal ebenfalls geringere Schaltverluste.

Bei einer bevorzugten Ausführungsform umfasst die Startschaltung ein Verzögerungsglied, insbesondere die Serienschaltung eines Kondensators und eines ersten ohmschen Widerstands, wobei die Serienschaltung zwischen den ersten und den zweiten Eingangsanschluss des ersten Eingangs gekoppelt ist, wobei der Kopplungspunkt des Kondensators des ersten ohmschen Widerstands mit dem Eingang einer Triggerschaltung, insbesondere einem Schmitt- Trigger oder einem Schmitt- Trigger- Inverter, gekoppelt ist, wobei der Ausgang der Triggerschaltung mit dem Ausgang der Startschaltung gekoppelt ist. Auf diese Weise wird ermöglicht, dass der tiefliegende Schalter für eine Zeitdauer eingeschaltet wird, die eine ausreichende Ladung des Bootstrap- Kondensators ermöglicht, das heißt der Bootstrap- Kondensator muss während dieses Zeitraums ausreichend stark aufgeladen werden, um ein Einschalten des hochliegenden Schalters zu ermöglichen. Nach Ablauf einer vorgebbaren Zeitdauer wird demnach an den entsprechenden Eingang der Ansteuervorrichtung ein Signal gelegt, das ein Einschalten des hochliegenden Schalters veranlasst. Infolge des innerhalb des vorgebbaren Zeitraums aufgeladenen Bootstrap- Kondensators liegt dann eine entsprechende Spannung seitens der Ansteuervorrichtung vor, um den hochliegenden Schalter tatsächlich einzuschalten.

Bevorzugt umfasst die Triggerschaltung eine Triggerdiode, insbesondere einen Diac.

Bevorzugt umfasst die Startschaltung weiterhin die Serienschaltung eines zweiten ohmschen Widerstands und einer Diode, wobei die Serienschaltung des zweiten ohmschen Widerstand und der Diode zwischen den Kopplungspunkt des ersten ohmschen Widerstands und des Kondensators einerseits und den zweiten Eingang der Startschaltung andererseits gekoppelt ist. Auf diese Weise wird ein Entladepfad für den Kondensator bereitgestellt, sodass das Potential am Eingang der Triggerschaltung geändert werden kann.

Bevorzugt sind der erste und der zweite Shunt-Widerstand so bemessen, dass in der Entladephase der Buckdrossel die Spannung am zweiten Eingang der Ansteuervorrichtung kleiner ist als die Spannung am ersten Eingang der Ansteuervorrichtung. Dadurch können die über den beiden Shunt-Widerständen abfallenden Spannungen für sequentielle Schaltvorgänge verwendet werden.

Der Buck-Konverter kann weiterhin mindestens eine erste Stromquelle umfassen, die ausgelegt ist, an ihrem Ausgang einen ersten Strom bereitzustellen, wobei die erste Stromquelle mit einem sechsten Eingang der Ansteuervorrichtung gekoppelt ist, und die Ansteuervorrichtung ausgelegt ist, auf der Basis des ersten Stroms einen zweiten Anteil des ersten und/oder des zweiten Steuersignals zu erzeugen. Durch Variation des von der ersten Stromquelle bereitgestellten ersten Stroms kann damit eine Variation der Ein- und Ausschaltzeitpunkte der Schalter der Halbbrückenanordnung erreicht werden, wodurch die mindestens eine LED gedimmt werden kann.

Die Ansteuervorrichtung kann weiterhin mindestens einen dritten ohmschen Widerstand umfassen, wobei der zweite Anteil des ersten und/oder des zweiten Steuersignals das Produkt aus dem dritten ohmschen Widerstand und dem ersten Strom darstellt. Auf diese Weise wird die Möglichkeit bereitgestellt, die im Betrieb über dem ersten ohmschen Widerstand infolge des ersten Stroms abfallende Spannung zum ersten Anteil des ersten und/oder des zweiten Steuersignals hinzuzuaddieren und damit infolge der Variabilität des von der ersten Stromquelle bereitgestellten ersten Stroms einen variablen Anteil des ersten und/oder des zweiten Steuersignals zu erzeugen. Damit kann auf besonders einfache Weise auf den Ein- und/oder Ausschaltzeitpunkt der Schalter der Halbbrückenanordnung Einfluss genommen werden.

Die Ansteuervorrichtung kann bevorzugt einen Hilfsschalter umfassen, der eine Steuerelektrode, eine Arbeitselektrode und eine Bezugselektrode aufweist, wobei die Steuerelektrode des Hilfsschalters mit dem ersten Eingang der Ansteuervorrichtung gekoppelt ist. Zur Beeinflussung der am ersten Eingang der Ansteuervorrichtung anliegenden Spannung ist bevorzugt der dritte ohmsche Widerstand zwischen die Steuerelektrode des Hilfsschalters und den ersten Eingang der Ansteuervorrichtung gekoppelt sein. Bevorzugt ist dabei der dritte ohmsche Widerstand zwischen die Steuerelektrode des Hilfsschalters und den ersten Eingang der Ansteuervorrichtung gekoppelt. Weiterhin ist bevorzugt der sechste Eingang der Ansteuervorrichtung mit dem Knoten gekoppelt, über den die Steuerelektrode des Hilfsschalters mit dem dritten ohmschen Widerstand der Ansteuervorrichtung gekoppelt ist.

Weiterhin bevorzugt ist die Bezugselektrode des Hilfsschalters mit dem zweiten Eingang der Ansteuervorrichtung gekoppelt, wobei die Arbeitselektrode des Hilfsschalters mit dem vierten Eingang der Ansteuervorrichtung gekoppelt ist. Der erste Hilfsschalter wird demnach in Basisschaltung betrieben, wodurch sich besonders hohe Schaltgeschwindigkeiten erzielen lassen.

Die Ansteuervorrichtung umfasst bevorzugt weiterhin eine erste und eine zweite Diode, die antiseriell in Serie zwischen den vierten Eingang und die Arbeitselektrode des Hilfsschalters gekoppelt sind, wobei der Kopplungspunkt der ersten und der zweiten Diode über einen vierten ohmschen Widerstand mit dem dritten Eingang der Ansteuervorrichtung gekoppelt ist. Auf diese Weise wird einerseits sichergestellt, dass das Potential am vierten Eingang der Ansteuervorrichtung einerseits von der Startschaltung, andererseits über den Hilfsschalter angesteuert werden kann.

Bevorzugt umfasst die Ansteuervorrichtung einen integrierten Halbbrücken- Treiber- Baustein, der einen Steuereingang umfasst, wobei der Kopplungspunkt der ersten und der zweiten Diode mit dem Steuereingang gekoppelt ist. Bei dem Baustein kann es sich beispielsweise um den Typ LM5104 handeln. Der Steuereingang ist der Eingang "IN".

Um definierte Potentialverhältnisse beim erstmaligen Einschalten des ersten Schalters sicherzustellen, ist vorzugsweise weiterhin ein Pull-Up-Widerstand vorgesehen, der zwischen den Brückenmittelpunkt und den ersten Eingangsanschluss des ersten Eingangs gekoppelt ist.

Weitere bevorzugte Ausführungsformen ergeben sich aus den Unteransprüchen.

## Kurze Beschreibung der Zeichnung(en)

Im Nachfolgenden werden nunmehr Ausführungsbeispiele der vorliegenden Erfindung unter Bezugnahme auf die beigefügten Zeichnungen näher beschrieben. Es zeigen:

Fig. 1    in schematischer Darstellung ein erstes Ausführungsbeispiel eines erfindungsgemäßen Buck-Konverters; und

Fig. 2    eine detailliertere Darstellung des in Fig. 1 dargestellten Ausführungsbeispiels.

## Bevorzugte Ausführung der Erfindung

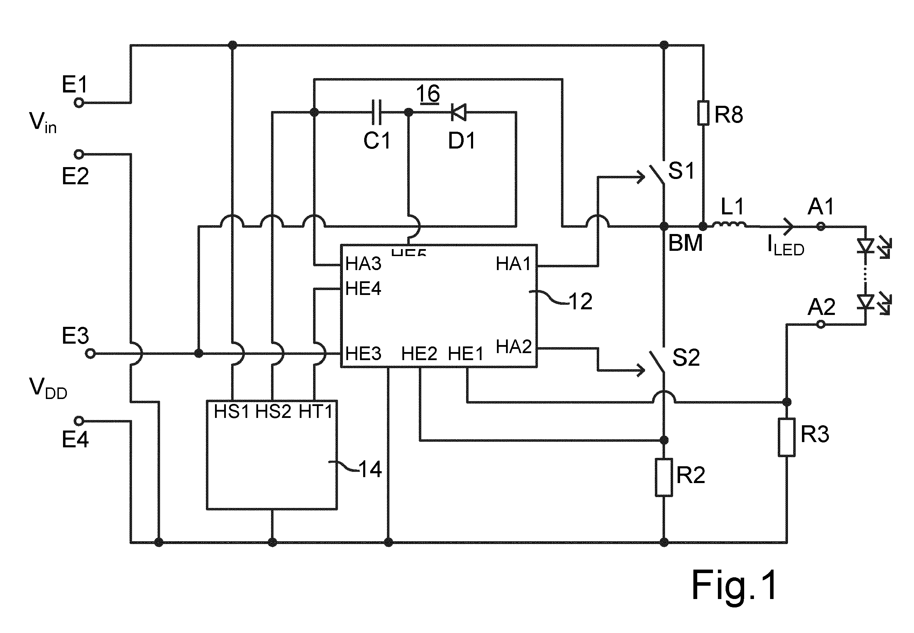

Fig. 1 zeigt in schematischer Darstellung ein Ausführungsbeispiel eines erfindungsgemäßen Buck-Konverters. Dieser weist einen ersten Eingang mit einem ersten E1 und einem zweiten Eingangsanschluss E2 auf. Der erste Eingang dient zum Koppeln mit einer ersten Gleichspannungsquelle $V_{in}$. Ein zweiter Eingang mit einem ersten E3 und einem zweiten Eingangsanschluss E4 dient zum Koppeln mit einer zweiten Gleichspannungsquelle $V_{DD}$. Selbstverständlich kann nur eine Gleichspannungsquelle vorgesehen werden, aus der die beiden erwähnten Spannungen $V_{in}$ und $V_{DD}$ abgeleitet werden.

Der Buck-Konverter weist einen Ausgang mit einem ersten A1 und einem zweiten Ausgangsanschluss A2 auf, um den Buck-Konverter mit mindestens einer LED zu koppeln. Es ist eine Brückenschaltung mit einem ersten S1 und einem zweiten elektronischen Schalter S2 in Halbbrückenanordnung vorgesehen, wobei der erste S1 und der zweite Schalter S2 unter Ausbildung eines Brückenmittelpunkts BM seriell zwischen den ersten E1 und den zweiten Eingangsanschluss E2 des ersten Eingangs gekoppelt sind. Der Schalter S1 ist der hochliegende Schalter und der Schalter S2 der tiefliegende Schalter der Halbbrückenanordnung. Beide Schalter weisen jeweils eine Steuerelektrode, eine Arbeitselektrode und eine Bezugselektrode auf. Eine Buck-Drossel L1 ist zwischen dem Brückenmittelpunkt BM und den ersten Ausgangsanschluss A1 gekoppelt. Eine Ansteuervorrichtung 12 dient der Ansteuerung des ersten S1 und des zweiten Schalters S2. Zu diesem Zweck umfasst die Ansteuervorrichtung 12 einen ersten Ausgang HA1, der mit der Steuerelektrode des ersten Schalters S1 gekoppelt ist sowie einen zweiten Ausgang HA2, der mit der Steuerelektrode des zweiten Schalters S2 gekoppelt ist. Ein dritter Ausgang HA3 ist mit dem Brückenmittelpunkt BM gekoppelt. Sie umfasst weiterhin einen ersten HE1, einen zweiten HE2, einen dritten HE3, einen vierten HE4 und einen fünften Eingang HE5.

Der Buck-Konverter umfasst einen ersten Shunt-Widerstand R3, der derart angeordnet ist, dass er sowohl in der Auflade- als auch in der Entladephase der Buckdrossel L1 vom Strom durch die mindestens eine LED durchflossen wird. Ein zweiter Shunt-Widerstand R2 ist derart angeordnet, dass er nur in der Entladephase der Buckdrossel L1 vom Strom durch die mindestens eine LED durchflossen wird.

Die über dem Shunt-Widerstand R3 abfallende Spannung ist mit dem ersten Eingang HE1 der Ansteuervorrichtung 12 gekoppelt. Die über dem zweiten Shunt-Widerstand R2 abfallende Spannung ist mit dem Eingang HE2 der Ansteuervorrichtung 12 gekoppelt. Die Ansteuervorrichtung 12 ist ausgelegt, unter Verwendung der Spannung am Eingang HE1 als ersten Anteil eines ersten Steuersignals an ihrem Ausgang HA1 ein Abschaltsignal für den Schalter S1 und an ihrem Ausgang HA2 ein Einschaltsignal für den Schalter S2 zu erzeugen, und unter Verwendung der Spannung am Eingang HE2 als ersten Anteil eines zweiten Steuersignals an ihrem Ausgang HA1 ein Einschaltsignal für den Schalter S1 und an ihrem Ausgang HA2 ein Ausschaltsignal für den Schalter S2 zu erzeugen.

Der dritte Eingang HE3 der Ansteuervorrichtung 12 ist mit dem ersten Eingangsanschluss E3 des zweiten Eingangs gekoppelt.

Es ist eine Startschaltung 14 vorgesehen, die einen ersten HS1 und einen zweiten Eingang HS2 aufweist. Der erste Eingang HS1 der Startschaltung 14 ist mit dem ersten Eingangsanschluss E1 des ersten Eingangs gekoppelt, während der zweite Eingang HS2 der Startschaltung 14 mit dem Brückenmittelpunkt BM gekoppelt ist. Die Startschaltung weist weiterhin einen Ausgang HT1 auf, der mit dem vierten Eingang HE4 der Ansteuervorrichtung 12 gekoppelt ist. Die Startschaltung 14 ist ausgelegt, nach dem Anlegen der ersten Gleichspannungsquelle $V_{in}$ an den ersten Eingang E1, E2 des Buck-Konverters ein Schaltsignal einer vorgebbaren Dauer an ihrem Ausgang HT1 bereitzustellen.

Es ist weiterhin eine Bootstrap-Schaltung 16 vorgesehen, die eine Bootstrap-Diode D1 und einen Bootstrap-Kondensator C1 in Serienschaltung umfasst. Der von der Bootstrap-Diode D1 abgewandte Anschluss des Bootstrap-Kondensators C1 ist mit dem Brückenmittelpunkt BM gekoppelt. Der von dem Bootstrap-Kondensator C1 abgewandte Anschluss der Bootstrap-Diode D1 ist mit dem ersten Eingangsanschluss E3 des zweiten Eingangs gekoppelt. Der Verbindungspunkt zwischen der Bootstrap-Diode D1 und dem Bootstrap-Kondensator C1 ist mit dem fünften Eingang HE5 der Ansteuervorrichtung 12 gekoppelt. Die Ansteuervorrichtung 12 ist ausgelegt, an ihrem ersten Ausgang HA1 ein Spannungssignal bereitzustellen, wenn die Spannung am fünften Eingang HE5 einen vorgebbaren Wert übersteigt.

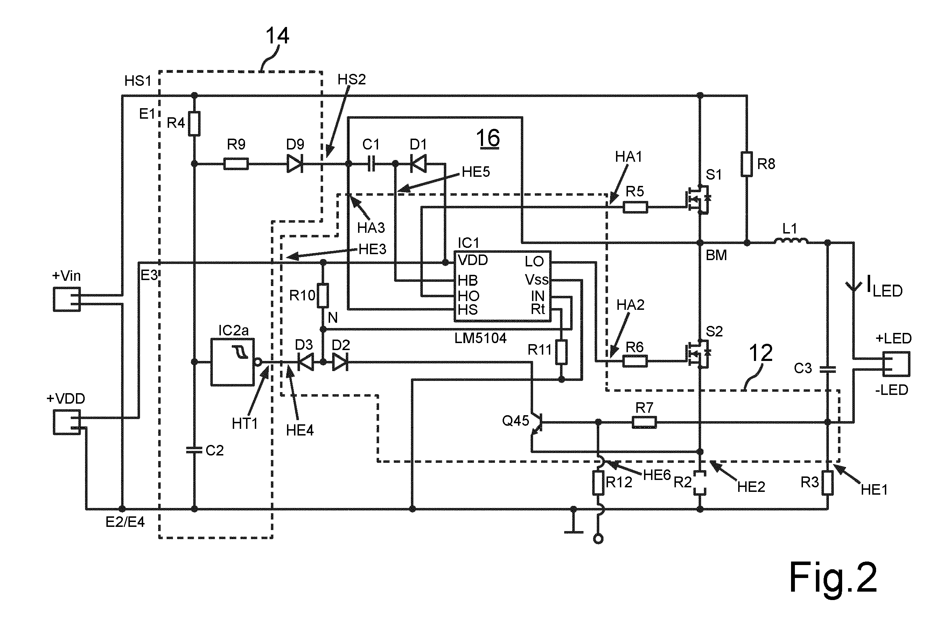

Die mit Bezug auf Fig. 1 eingeführten Bezugszeichen gelten auch für die detailliertere Darstellung eines erfindungsgemäßen Buck-Konverters gemäß Fig. 2. Demnach umfasst die Startschaltung 14 ein Verzögerungsglied, das vorliegend als Serienschaltung eines Kondensators C2 und eines ohmschen Widerstands R4 ausgeführt ist, wobei diese Serienschaltung zwischen den ersten E1 und den zweiten Eingangsanschluss E2 des ersten Eingangs gekoppelt ist. Der Kopplungspunkt des Kondensators C2 und den ohmschen Widerstands R4 ist mit dem Eingang einer Triggerschaltung, vorliegend einem Schmitt-Trigger-Inverter IC2a gekoppelt. Der Ausgang der Triggerschaltung IC2a ist mit dem Ausgang HT1 der Startschaltung 14 gekoppelt. Die Startschaltung 14 umfasst weiterhin die Serienschaltung eines ohmschen Widerstands R9 und eine Diode D9, die zwischen den Kopplungspunkt des ohmschen Widerstands R4 und des Kondensators C2 einerseits und den Eingang HS2 der Startschaltung 14 andererseits gekoppelt ist.

Der erste R3 und der zweite Shunt-Widerstand R2 sind so bemessen, dass in der Entladephase der Buckdrossel L1 die Spannung am Eingang HE2 der Ansteuervorrichtung 12 kleiner ist als die Spannung am Eingang HE1 der Ansteuervorrichtung 12. Die Ansteuervorrichtung 12 umfasst einen Hilfsschalter Q45 dessen Steuerelektrode über einen ohmschen Widerstand R7 mit dem Eingang HE1 der Ansteuervorrichtung 12 gekoppelt ist. Über einen sechsten Eingang HE6 der Ansteuervorrichtung 12 kann eine nicht dargestellte Stromquelle über den ohmschen Widerstand R12 mit der Steuerelektrode des Hilfsschalters Q45 gekoppelt sein, um auf der Basis des von der Stromquelle gelieferten Stroms einen zweiten Anteil des ersten und/oder des zweiten Steuersignals zu erzeugen.

Die Bezugselektrode des Hilfsschalters Q45 ist mit dem zweiten Eingang HE2 der Ansteuervorrichtung 12 gekoppelt, wobei die Arbeitselektrode des Hilfsschalters Q45 mit dem vierten Eingang HE4 der Ansteuervorrichtung 12 gekoppelt ist. Die Ansteuervorrichtung 12 umfasst weiterhin eine erste Diode D2 und eine zweite Diode D3, die antiseriell mit verbundenen Anoden zwischen den vierten Eingangsanschluss HE4 und die Arbeitselektrode des Hilfsschalters Q45 gekoppelt sind. Der Kopplungspunkt der Dioden D2, D3 ist über einen ohmschen Widerstand R10 mit dem dritten Eingang HE3 der Ansteuervorrichtung 12 gekoppelt. Die Ansteuervorrichtung 12 umfasst bevorzugt einen integrierten Halbbrücken-Treiber-Baustein IC1, beispielsweise vom Typ LM5104. Dabei ist der Anschluss $V_{DD}$ dieses Bausteins IC1 mit dem Eingang HE3 gekoppelt, der Anschluss HB mit dem Eingang HE5, der Anschluss HO mit dem Ausgang HA1, der Anschluss HS mit dem Ausgang HA3, der Anschluss LO mit dem Ausgang HA2, der Anschluss VSS mit dem Bezugspotential, der Anschluss IN mit dem Eingang HE4 und der Anschluss Rt über einen ohmschen Widerstand R11 mit dem Bezugspotential. Die den Anschlüssen zugeordneten Funktionalitäten des Bausteins LM5104 sind dem Fachmann bekannt. Bei anderen für den vorliegenden Zweck verwendbaren Halbbrücken-Treiber-Bausteinen IC1 sind vergleichbare Funktionalitäten vorgesehen, auch wenn die Anschlüsse andere Bezeichnungen tragen können.

Zwischen den Brückenmittelpunkt BM und den Eingangsanschluss E1 des ersten Eingangs ist ein Pull-Up-Widerstand R8 vorgesehen.

Die grundsätzliche Funktionsweise eines erfindungsgemäßen Buck-Konverters basiert auf der Funktionsweise des bereits aus der WO 2009/089912 beziehungsweise aus der WO 2012/010591 A2 bekannten Buck-Konverters, sodass im Nachfolgenden im Wesentlichen auf die Unterschiede zu diesen bekannten Buck-Konvertern eingegangen wird:

Nach dem Anlegen der Gleichspannungsquellen $V_{in}$ und $V_{DD}$ wird der Kondensator C2 über den ohmschen Widerstand R4 aus der Gleichspannungsquelle $V_{in}$ aufgeladen. Sobald der Kondensator C2 aufgeladen ist, liegt am Eingang des Schmitt-Trigger-Inverters ein Signal "logisch Eins" an, sodass an seinem Ausgang ein Signal "logisch Null" bereitgestellt wird. Der Knoten N, das heißt der Verbindungspunkt zwischen den Dioden D2 und D3 liegt daher ebenfalls auf "logisch Null". Infolgedessen liegt auch der Steuereingang IN des IC1 auf "logisch null". Dies führt dazu, dass der Baustein IC1 an seinem Ausgang LO ein Einschaltsignal an den Schalter S2 bereitstellt. Zum Einschalten dieses Schalters S2 ist die Spannung $V_{DD}$ ausreichend. Wenn der Schalter S2 eingeschaltet wird, geht das Potential am Brückenmittelpunkt BM auf nahezu Null zurück. Dies führt dazu, dass am Eingang HS2 der Startschaltung 14 ein Potential von nahezu Null anliegt, wodurch sich der Kondensator C2 über die Serienschaltung aus ohmschen Widerstand R9 und Diode D9 entlädt. Mit einer gewissen Verzögerung wechselt daher das Potential am Eingang des Schmitt-Trigger-Inverters IC2a von "logisch Eins" auf "logisch Null". Insofern wechselt entsprechend das Potential an seinem Ausgang HT1 von "logisch Null" auf "logisch Eins". Das Potential am Knoten N wird über den ohmschen Widerstand R10 auf "logisch Eins" gesetzt.

Der linke Anschluss des Kondensators C1 liegt auf Bezugspotential, sodass der Kondensator C1 über die Diode D1 geladen werden kann.

Der Baustein IC1 ist ausgelegt, die Spannung $V_{DD}$ und die Spannung an seinem Eingang HB, das heißt die Spannung über dem Kondensator C1, zu überwachen. Sobald der Kondensator C1 geladen ist, steht demnach eine ausreichend große Spannung am Ausgang HO des Bausteins IC1 bereit, um den hochliegenden Schalter S1 einzuschalten. Gleichzeitig wird der Schalter S2 in den nicht-leitenden Zustand geschaltet. Die Aufladephase der Buckdrossel L1 hat begonnen. Dabei fließt ein Strom $I_{LED}$ über den Schalter S1, die Buck-Drossel L1, die LEDs, über den ohmschen Widerstand R3 und das Bezugspotential zurück zum Eingangsanschluss E2. Durch die Zunahme des Laststroms $I_{LED}$ steigt die am ohmschen Widerstand R3 abfallende Spannung bis dies bei Überschreiten der Basis-Emitter-Schwellspannung des Hilfsschalters Q45 von ca. 0,6 V dazu führt, dass der Hilfsschalter Q45 in den leitenden Zustand geschaltet wird. Dadurch sinkt das Potential am Knoten N auf "logisch Null". Dies führt über den Steuereingang IN des Bausteins IC1 dazu, dass der Schalter S1 ausgeschaltet und der Schalter S2 eingeschaltet wird. Die Freilaufphase der Buckdrossel L1 hat begonnen. In der Freilaufphase fließt ein Strom $I_{LED}$ vom Bezugspotential über den ohmschen Widerstand R2, den Schalter S2, die Buck-Drossel L1 sowie die LEDs und den ohmschen Widerstand R3 zurück zum Bezugspotential. Durch die am ohmschen Widerstand R2 abfallende Spannung wird zunächst der Hilfsschalter Q45 noch leitender geschaltet. Da nun der Laststrom $I_{LED}$ aufgrund der Entmagnetisierung der Buck-Drossel L1 sinkt, sinkt die Basis-Emitter-Spannung des Hilfsschalters Q45, die sich wie folgt darstellt:

$$U_{BE}(Q45) = (R2 + R3) \bullet I_{LED}.$$

Sinkt die Spannung $U_{BE}$ unter die Schwellspannung von ca. 0,6 V bis 0,7 V, geht der Hilfsschalter Q45 in den sperrenden Zustand über. Dadurch wechselt das Potential am Knoten N wieder auf "logisch Eins", sodass in der Folge der Schalter S1 wieder eingeschaltet wird, siehe oben.

Sinngemäß wird der obere Grenzwert des Stroms $I_{LED}$ bestimmt zu:

$I_{LEDmaX} = U_{BEF}(Q45)/R3$ und der untere Grenzwert des LED- Stroms bestimmt zu:

$$I_{LEDmin} = U_{BEF}(Q45)/(R2 + R3).$$

Der ohmsche Widerstand R8 (Pull- Up- Widerstand) dient zur Definition des Potentials am Halbbrückenmittelpunkt BM in der Anlaufphase der Schaltung. Über den ohmschen Widerstand R8 wird demnach an dem Source- Anschluss des Schalters S1 ein zum Starten des Buck- Konverters ausreichend hohes Potential bereitgestellt.

Die Spannung $V_{in}$ beträgt bevorzugt zwischen +5 V und 200 V, während die Spannung $V_{DD}$ bevorzugt zwischen 10 V und 15 V beträgt.

**Patentansprüche**

1. Buck-Konverter zum Bereitstellen eines Stroms ($I_{LED}$) für mindestens eine LED mit

   - einem ersten Eingang mit einem ersten (E1) und einem zweiten Eingangsanschluss (E2) zum Koppeln mit einer ersten Gleichspannungsquelle (Vin);
   - einem Ausgang mit einem ersten (A1) und einem zweiten Ausgangsanschluss (A2) zum Koppeln mit der mindestens einen LED;
   - einer Buckdrossel (L1);
   - einem ersten Shunt-Widerstand (R3), der derart angeordnet ist, dass er sowohl in der Auflade- als auch in der Entladephase der Buckdrossel (L1) vom Strom ($I_{LED}$) durch die mindestens eine LED durchflossen wird; und
   - einem zweiten Shunt-Widerstand (R2), der derart angeordnet ist, dass er nur in der Entladephase der Buckdrossel (L1) vom Strom ($I_{LED}$) durch die mindestens eine LED durchflossen wird;

   **dadurch gekennzeichnet,**
   **dass** der Buck-Konverter weiterhin umfasst:

   - einen zweiten Eingang mit einem ersten (E3) und einem zweiten Eingangsanschluss (E4) zum Koppeln mit einer zweiten Gleichspannungsquelle (VDD);
   - eine Brückenschaltung mit einem ersten (S1) und einem zweiten elektronischen Schalter (S2) in Halbbrückenanordnung, wobei der erste (S1) und der zweite Schalter (S2) unter Ausbildung eines Brükkenmittelpunkts (BM) seriell zwischen den ersten (E1) und den zweiten Eingangsanschluss (E2) des ersten Eingangs gekoppelt sind, wobei der erste Schalter (S1) der hochliegende Schalter und der zweite Schalter (S2) der tiefliegende Schalter ist, wobei der erste (S1) und der zweite elektronische Schalter (S2) jeweils eine Steuerelektrode, eine Arbeitselektrode und eine Bezugselektrode aufweisen, wobei die Buckdrossel (L1) zwischen den Brükkenmittelpunkt (BM) und den ersten Ausgangsanschluss (A1) gekoppelt ist;
   - eine Ansteuervorrichtung (12) zur Ansteuerung des ersten (S1) und des zweiten elektronischen Schalters (S2), wobei die Ansteuervorrichtung (12) einen ersten Ausgang (HA1) umfasst, der mit der Steuerelektrode des ersten elektronischen Schalters (S1) gekoppelt ist, einen zweiten Ausgang (HA2), der mit der Steuerelektrode des zweiten elektronischen Schalters (S2) gekoppelt ist, einen dritten Ausgang (HA3), der mit dem Brückenmittelpunkt (BM) gekoppelt ist, sowie einen ersten (HE1), einen zweiten (HE2), einen dritten (HE3) und einen vierten Eingang (HE4); wobei die über dem ersten Shunt-Widerstand (R3) abfallende Spannung mit dem ersten Eingang (HE1) der Ansteuervorrichtung (12) gekoppelt ist, wobei die über dem zweiten Shunt-Widerstand (R2) abfallende Spannung mit dem zweiten Eingang (HE2) der Ansteuervorrichtung (12) gekoppelt ist,
   - wobei die Ansteuervorrichtung (12) ausgelegt ist, unter Verwendung der Spannung am ersten Eingang (HE1) als ersten Anteil eines ersten Steuersignals an ihrem ersten Ausgang (HA1) ein Abschaltsignal für den ersten Schalter (S1) und an ihrem zweiten Ausgang (HA2) ein Einschaltsignal für den zweiten Schalter (S2) zu erzeugen, und unter Verwendung der Spannung am zweiten Eingang (HE2) als ersten Anteil eines zweiten Steuersignals an ihrem ersten Ausgang (HA1) ein Einschaltsignal für den ersten Schalter (S1) und an ihrem zweiten Ausgang (HA2) ein Ausschaltsignal für den zweiten Schalter (S2) zu erzeugen,
   - wobei der dritte Eingang (HE3) der Ansteuervorrichtung (12) mit dem ersten Eingangsanschluss (E3) des zweiten Eingangs gekoppelt ist;
   - eine Startschaltung (14), die einen ersten (HS1) und einen zweiten Eingang (HS2) aufweist, wobei der erste Eingang (HS1) der Startschaltung (14) mit dem ersten Eingangsanschluss (E1) des ersten Eingangs gekoppelt ist, wobei der zweite Eingang (HS2) der Startschaltung (14) mit dem Brückenmittelpunkt (BM) gekoppelt ist, sowie einen Ausgang (HT1), der mit dem vierten Eingang (HE4) der Ansteuervorrichtung (12) gekoppelt ist, wobei die Startschaltung (14) ausgelegt ist, nach dem Anlegen der ersten Gleichspannungsquelle (Vin) an den ersten Eingang (E1, E2) des Buck-Konverters ein Schaltsignal einer vorgebbaren Dauer an ihrem Ausgang (HT1) bereitzustellen; und
   - eine Bootstrap-Schaltung (16) mit einer Bootstrap-Diode (D1) und einem Bootstrap-Kondensator (C1) in Serienschaltung, wobei der von der Bootstrap-Diode (D1) abgewandte Anschluss des Bootstrap-Kondensators (C1) mit dem Brückenmittelpunkt (BM) gekoppelt ist, wobei der von dem Bootstrap-Kondensator (C1) abgewandte Anschluss der Bootstrap-Diode (D1) mit dem ersten Eingangsanschluss (E3) des zweiten Eingangs gekoppelt ist, wobei der Verbindungspunkt zwischen der Bootstrap-Diode (D1) und dem Bootstrap-Kondensator (C1) mit einem fünften Eingang (HE5) der Ansteuervorrichtung (12) gekoppelt ist, wobei die Ansteuervorrichtung (12) ausgelegt ist, an ihrem ersten Ausgang (HA1) ein Spannungssignal bereitzustellen, wenn die Spannung am fünften Eingang

(HE5) einen vorgebbaren Wert übersteigt.

2. Buck- Konverter nach Anspruch 1,
**dadurch gekennzeichnet,**
**dass** die Startschaltung (14) ein Verzögerungsglied, insbesondere die Serienschaltung eines Kondensators (C2) und eines ersten ohmschen Widerstands (R4) umfasst, wobei die Serienschaltung zwischen den ersten (E1) und den zweiten Eingangsanschluss (E2) des ersten Eingangs gekoppelt ist, wobei der Kopplungspunkt des Kondensators (C2) und des ersten ohmschen Widerstands (R4) mit dem Eingang einer Triggerschaltung (IC2a), insbesondere einem Schmitt- Trigger oder einem Schmitt- Trigger- Inverter, gekoppelt ist, wobei der Ausgang der Triggerschaltung (IC2a) mit dem Ausgang (HT1) der Startschaltung (14) gekoppelt ist.

3. Buck-Konverter nach Anspruch 2,
**dadurch gekennzeichnet,**
**dass** die Triggerschaltung eine Triggerdiode, insbesondere einen Diac, umfasst.

4. Buck-Konverter nach einem der Ansprüche 2 oder 3,
**dadurch gekennzeichnet,**
**dass** die Startschaltung (14) weiterhin die Serienschaltung eines zweiten ohmschen Widerstands (R9) und einer Diode (D9) umfasst, wobei die Serienschaltung des zweiten ohmschen (R9) Widerstands und der Diode (D9) zwischen den Kopplungspunkt des ersten ohmschen Widerstands (R4) und des Kondensators (C2) einerseits und den zweiten Eingang (HS2) der Startschaltung (14) andererseits gekoppelt ist.

5. Buck-Konverter nach einem der vorhergehenden Ansprüche,
**dadurch gekennzeichnet,**
**dass** der erste (R3) und der zweite Shunt-Widerstand (R2) so bemessen sind, dass in der Entladephase der Buckdrossel (L1) die Spannung am zweiten Eingang der Ansteuervorrichtung (12) kleiner ist als die Spannung am ersten Eingang (HE1) der Ansteuervorrichtung (12).

6. Buck-Konverter nach einem der vorhergehenden Ansprüche,
**dadurch gekennzeichnet,**
**dass** der Buck-Konverter weiterhin mindestens eine erste Stromquelle umfasst, die ausgelegt ist, an ihrem Ausgang einen ersten Strom bereitzustellen, wobei die erste Stromquelle mit einem sechsten Eingang (HE6) der Ansteuervorrichtung (12) gekoppelt ist, und die Ansteuervorrichtung (12) ausgelegt ist, auf der Basis des ersten Stroms einen zweiten Anteil des ersten und/oder des zweiten Steuersignals zu erzeugen.

7. Buck-Konverter nach Anspruch 6,
**dadurch gekennzeichnet,**
**dass** die Ansteuervorrichtung (12) mindestens einen dritten ohmschen Widerstand (R7) umfasst, wobei der zweite Anteil des ersten und/oder des zweiten Steuersignals das Produkt aus dem dritten ohmschen Widerstand (R7) und dem ersten Strom darstellt.

8. Buck-Konverter nach einem der vorhergehenden Ansprüche,
**dadurch gekennzeichnet,**
**dass** die Ansteuervorrichtung (12) einen Hilfsschalter (Q45) umfasst, der eine Steuerelektrode, eine Arbeitselektrode und eine Bezugselektrode aufweist, wobei die Steuerelektrode des Hilfsschalters (Q45) mit dem ersten Eingang (HE1) der Ansteuervorrichtung (12) gekoppelt ist.

9. Buck-Konverter nach Anspruch 8,
**dadurch gekennzeichnet,**
**dass** der dritte ohmsche Widerstand (R7) zwischen die Steuerelektrode des Hilfsschalters (Q45) und den ersten Eingang (HE1) der Ansteuervorrichtung (12) gekoppelt ist.

10. Buck-Konverter nach Anspruch 9,
**dadurch gekennzeichnet,**
**dass** der sechste Eingang (HE6) der Ansteuervorrichtung (12) mit dem Knoten gekoppelt ist, über den die Steuerelektrode des Hilfsschalters (Q45) mit dem dritten ohmschen Widerstand (R7) der Ansteuervorrichtung (12) gekoppelt ist.

11. Buck-Konverter nach einem der Ansprüche 8 bis 10,
**dadurch gekennzeichnet,**
**dass** die Bezugselektrode des Hilfsschalters (Q45) mit dem zweiten Eingang (HE2) der Ansteuervorrichtung (12) gekoppelt ist, wobei die Arbeitselektrode des Hilfsschalters (Q45) mit dem vierten Eingang (HE4) der Ansteuervorrichtung (12) gekoppelt ist.

12. Buck-Konverter nach einem der Ansprüche 8 bis 11,
**dadurch gekennzeichnet,**
**dass** die Ansteuervorrichtung (12) weiterhin eine erste (D2) und eine zweite Diode (D3) umfasst, die antiseriell in Serie zwischen den vierten Eingang (HE4) und die Arbeitselektrode des Hilfsschalters (Q45) gekoppelt sind, wobei der Kopplungspunkt (N) der ersten (D2) und der zweiten Diode (D3) über einen vierten ohmschen Widerstand (R10) mit dem dritten Eingang (HE3) der Ansteuervorrichtung (12) gekoppelt ist.

13. Buck-Konverter nach Anspruch 12,
**dadurch gekennzeichnet,**
**dass** die Ansteuervorrichtung (12) einen integrierten Halbbrücken-Treiber-Baustein (IC1) umfasst, der einen Steuereingang (IN) umfasst, wobei der Kopplungspunkt (N) der ersten (D2) und der zweiten Diode (D3) mit dem Steuereingang (IN) gekoppelt ist.

14. Buck-Konverter nach einem der vorhergehenden Ansprüche,
**dadurch gekennzeichnet,**
**dass** er weiterhin einen Pull-Up-Widerstand (R8) umfasst, der zwischen den Brückenmittelpunkt (BM) und den ersten Eingangsanschluss des ersten Eingangs (E1) gekoppelt ist.

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012010591 A2
- WO 2009089912 A